(19) Europäisches Patentamt

European Patent Office

Office européen des brevets

(11) EP 2 914 129 B1

## (12) EUROPEAN PATENT SPECIFICATION

(45) Date of publication and mention
of the grant of the patent:
**25.05.2016 Bulletin 2016/21**

(21) Application number: **13780152.8**

(22) Date of filing: **24.10.2013**

(51) Int Cl.:
*A23L 29/256* [(2016.01)]        *A23L 23/10* [(2016.01)]

(86) International application number:
**PCT/EP2013/072236**

(87) International publication number:
**WO 2014/067839 (08.05.2014 Gazette 2014/19)**

(54) **FOOD CONCENTRATE IN THE FORM OF A GEL**

LEBENSMITTELKONZENTRAT IN FORM EINES GELS

COMPOSITION ALIMENTAIRE CONCENTRÉE SOUS FORME DE GEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2012 EP 12191310**

(43) Date of publication of application:
**09.09.2015 Bulletin 2015/37**

(72) Inventors:
• **MELLEMA, Michel**
  **NL-3133 AT Vlaardingen (NL)**
• **SCHUMM, Stephan Georg**
  **NL-3133 AT Vlaardingen (NL)**
• **SILVA PAES, Sabrina**
  **NL-3133 AT Vlaardingen (NL)**

(74) Representative: **Tjon, Hon Kong Guno et al**
**Unilever N.V.**
**Unilever Patent Group**
**Olivier van Noortlaan 120**
**3133 AT  Vlaardingen (NL)**

(73) Proprietors:
• **Unilever N.V.**
  **3013 AL Rotterdam (NL)**
  Designated Contracting States:
  **AL AT BE BG CH CZ DE DK EE ES FI FR GR HR
  HU IS IT LI LT LU LV MC MK NL NO PL PT RO RS
  SE SI SK SM TR**
• **Unilever PLC**
  **London, Greater London EC4Y 0DY (GB)**
  Designated Contracting States:
  **CY GB IE MT**

(56) References cited:
**EP-A2- 0 271 131        WO-A1-2012/062919
US-A- 3 280 102        US-A1- 2008 299 267**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a food concentrate in the form of a gel and a process to prepare the same.

## Background of the invention

Solid food concentrates are used in cooking for decades in the form of a cooking aid. The most common form may be the stock cube. Such a solid concentrate allows unit dosing. A food concentrate requires a dilution step before consumption, which can be carried out for example by dilution in water, for example to create a soup or a bouillon, or by dilution in a dish, like a curry, a bean dish, a rice dish, a vegetable dish, or a stew, wherein the food concentrate adds flavouring and seasons the dish. Consequently, these solid food concentrates comprise a relatively high salt level, to allow the taste effect after dilution.
A recently developed food concentrate is a food concentrate in the form of a water-based, self-sustaining gel. To produce such a concentrate in the form of a semi-solid gel, the food concentrate comprises a gelling system.

Although many gelling agents are known in the art, the choice of a gelling system for a concentrated food product is not straightforward. Many gelling agents do not form a gel at the salt levels which are usually observed in food concentrates, for example a salt level of 20 wt% or higher, based on the total water content. It is often preferred that the food concentrate in the form of a gel is thermo-reversible, and easily dissolves when used in cooking. An increasing interest of consumers is observed for gelling systems which are perceived as natural.

A gelling agent which is used for hundreds of years in food applications are carrageenans. Carrageenans are also traditionally used in many industrial food applications like desserts e.g. puddings, low-fat margarines, and dairy cream alternatives. Carrageenans are polysaccharide gelling agents extracted from seaweeds. Carrageenan is often seen as a vegetarian alternative for gelatin. The carrageenan family consists of several members, among which three main classes: kappa-, lambda- and iota-carrageenan, which show a different behaviour. Kappa-carrageenan is used for example in batter due to its gelling nature. Lambda carrageenan is a binding agent, and viscosity increaser, for example in dough. Iota-carrageenan is mostly used in jams and normally requires calcium ions to develop a heat-reversible and flexible gel.

It was observed however, that the use of iota-carrageenan in a food concentrate in the form of a gel showed some disadvantages. It was found that especially at the high salt levels which are present in a food concentrate problems are observed which were not observed at low salt levels, or to a lesser extent than observed at low salt levels. During production of the food concentrate in the form of a gel the liquid pre-mix comprising iota-carrageenan needs to be heated to high temperatures of about 90°C to activate the iota-carrageenan. It was observed that in the presence of high salt levels the gel premix immediately solidifies upon filling the packagings. This requires high energy costs to heat the filling nozzle and possibly the entire production line to keep the mixture in pumpable form and to prevent shearing of the gel. The time frame to fill the individual packagings is relatively narrow. A further disadvantage is that iota-carrageenan gels may require relatively high levels of iota-carrageenan to provide a semi-solid texture at high salt levels.

Interestingly, at lower salt levels, for example of from 1 to 2 wt% such as might be used for ready-to-eat products, this problem is not present.

A food concentrate in the form of a gel comprising iota-carrageenan has been described in WO2012/062919. In this patent application iota-carrageenan is used in combination with xanthan gum. An extremely long time has been reported before a gel was properly formed, such as 12-24 hours or more. This requirement of additional gums like xanthan gum, in addition to carrageenan, is often not desired, as it can be perceived as not natural by the consumer. In addition, the presence of additional gum could contribute to the problem of thickening of the diluted food concentrate, for example a bouillon, after it has cooled down.

Therefore, it is the aim of the present invention to provide a high-salt food concentrate in the form of a gel, wherein the gelling system comprises iota-carrageenan, and which food concentrate allows for an efficient production process. Such a concentrate would allow a production process wherein the period wherein the ingredient mixture solidifies to form a semi-solid gel can be tailored to need: The time it takes to form a semi-solid gel texture is preferably not very short, to prevent solidification in the filling nozzles when the concentrate is filled into its packaging or in the machinery resulting in blocked machinery or sheared gels. The time it takes to form a semi-solid gel texture is preferably not very long, as this might cause additional cooling costs and spoiling of the seal or lid of the packaging. Preferably this time is less than some hours, or even less than 1 hour, for a food concentrate of about 30 grams when allowed to cool down at room temperature. Consequently, a process is desired wherein the time frame to fill the packaging and allow setting to a solid gel texture is more flexible and not too narrow. It is a further aim that the food concentrate in the form of a gel is sufficiently rigid, to allow easy removal from a packaging without significant damage to the gel. Despite this, it is desired that such a texture is achieved with relatively low levels of iota carrageenan.

## Summary of the invention

Surprisingly, these objectives have been met, at least partly, by food concentrate in the form of a semi-solid gel comprising:

- Water
- From 10 wt% to 40 wt% of sodium salt and potassium salt taken together, based on the weight of the total water content of the food concentrate, calculated as ((weight of sodium salt + weight of potassium salt) / (weight of sodium salt + weight of potassium salt + weight of total water content)) *100 (in %),
- iota-carrageenan, wherein the iota-carrageenan is dissolved in the water,
  wherein the ratio of ($Na^+$ cations/ ($Na^+$ cations + $K^+$ cations)) *100 (in %) is from 40 to 90 wt%

In a further aspect, the present invention relates to a process to prepare a food concentrate according to the invention, the process comprising the steps of:

a) Providing a mixture comprising water and iota-carrageenan,
b) Adding sodium salt and potassium salt,
c) Heating the mixture,
d) Transferring the mixture to a packaging, preferably after step c),
e) Solidifying the mixture, preferably after step d),

to result in a food concentrate in the form of a semi-solid gel.

## Detailed description of the invention

### Food concentrate

The food concentrate of the present invention is in the form of a semi-solid gel. Preferably, the gel is a self-sustaining gel. A paste texture is not desired. A semi-solid gel is known to the person skilled in the art of gelled bouillon concentrates.
A semi-solid gel texture allows the consumer of the food concentrate to remove the food concentrate from its packaging easily and in one piece. This is referred to in the field as unit dosing, an advantage shared with traditional, dry bouillon cubes. A semi-solid gel may allow making easy scoops for example with a spoon, which may be preferred for multi-dosage packagings. The semi-solid, preferably self-sustaining, gel texture is present at least at room temperature (20°C). The semi-solid gel texture prevents that the food concentrate flows apart, like a liquid, after or during removal from its packaging and allows it to maintain the shape, which at least to a certain extent reflects the shape the product had when present in its packaging, in this way allowing the desired unit-dosing. The gel texture is preferably not sticky, such as a paste (for example tomato paste).
The food concentrate of the invention preferably shows a rheology wherein the elastic modulus (G') is higher than the viscous modulus (G"). The ratio elastic modulus (G') to viscous modulus (G") is preferably higher than 1, more preferably higher than 3, most preferably higher than 5 Pa. The elastic modulus (G') is preferably higher than 15 Pa, more preferably higher than 20 Pa, even more preferably higher than 30 Pa, most preferably higher than 40 Pa. The elastic modulus (G') is preferably lower than 12000 Pa, more preferably lower than 8000 Pa, even more preferably lower than 5000 Pa, even more preferably lower than 2000 Pa, most preferably lower than 500 Pa. In combination with these G' values, the viscous modulus (G") is preferably higher than 1 Pa, more preferably higher than 3 Pa, even more preferably higher than 5 Pa, most preferably higher than 10 Pa. The viscous modulus (G") is preferably lower than 1000 Pa, more preferably lower than 500 Pa, even more preferably lower than 200 Pa, even more preferably lower than 100 Pa, most preferably lower than 50 Pa. Elastic and viscous moduli are terms known in the art of rheology. They have been described for example in "Das Rheologie Handbuch, Thomas Mezger, Curt R. Vincentz-Verlag, Hannover, 2000".
The protocol for measuring the elastic and viscous modulus is as follows:

- A state of the art rheometer such as the AR G2 (TA Instruments, New Castle, Delaware, USA) or Physica MCR 300 (Anton Paar GmbH, Graz, Austria) are suitable for this measurement;

- Parallel plates geometry, preferred plates with sandblasted surface

- Profile: Temperature sweep followed by time sweep test:

a. Load the sample at ~95 °C (For practical reasons, the sample is preferably added to the rheometer in molten state)

b. Temperature ramp : cool from loading temperature to 20 °C at a rate of 5°C/min while measuring the Elastic modulus (G') and viscous modulus (G") at a strain of within the linear viscoelastic region (e.g. 0.5% strain, pre-determined by a strain sweep test) and a frequency of 1 Hz

c. Time sweep: Keep at 20°C for 20 minutes while measuring G' and G" at the same strain and frequency conditions as during the cooling step b);

- Elastic modulus (G') and viscous modulus (G") should be taken as the plateau values after 20 min at 20°C (end of step c). If plateau values for G' and G" are not reached after 20 min (i.e. increase in G' within 1 min is more than 3%), allow more time for step c, until increase in G' within one min is less than 3%.

- The Elastic modulus when the plateau is achieved at step c) (typically after 20 min) is also referred to in this document as *"terminal gel strength"*.

The gel texture can also, for example, be analysed by a texture analyser, as known in the art. The texture can be characterised for example using common techniques such as texture analysis of penetration or compression, as measured with equipments such as a Texture Analyser (e.g. from Stable Microsystems™) or a Universal testing machine (e.g. from Instron™).

In a "penetration test", a plunger is forced into a concentrate and the force required for penetration of the food composition is plotted against the distance (or time) of penetration into the concentrate at a pre-determined speed to a pre-determined depth of penetration. The plunger is then withdrawn.

For this invention, the following set up is used to analyse the gel texture:

Test type: Penetration test

a. The measurements are performed after at least 12h maturation time after the samples are prepared and gelled (solidified). A longer maturation time of for example 24h to 48h is preferred.

b. The samples are equilibrated to room temperature for at least 2h, prior to measurement.

c. The machine and sample container specifications are as follows:

- Container (125 ml plastic cup), 52 milimeters diameter
- Sample height: at least 25 millimeters
- Equipment: Texture Analyser Stable Microsystems (or similar)
- Probe: 1/2 inch cylinder, smooth edges (P/0.5 - 0.5 inch diameter cylinder probe, Delrin)
- Test set up (adapted from application notes REF: GL3/P05R, stable micro systems, Revised: March 2006). The following settings are used:

- Load cell: 30kg
- Compression mode
- Pre-test speed =10 millimeters/second
- Test speed =5 millimeters/second
- Post-test speed=10 millimeters/second
- Trigger force = 3g
- Penetration depth=10 millimeters (measurement error can be typically of 0.1-0.2 mm).

d. Values of parameters below are presented as average and were at least done duplicates.

The following relevant parameters are used to characterise the gels according to this invention and are measured using a penetration test with a texture analyser according to the method as described above:

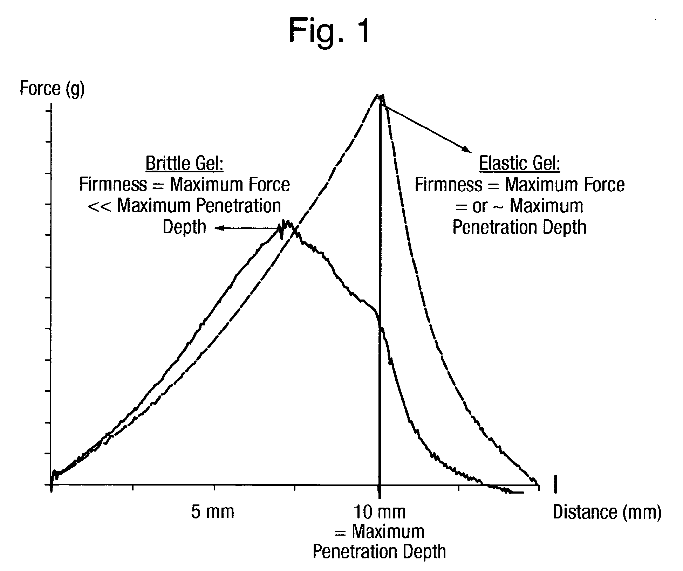

Firmness: The concentrate of the invention is not liquid, but has a semi-solid texture with certain firmness. For a semi-solid gel as in this invention two typical behaviours might be obtained. The maximum force (firmness) might be observed as a breaking point before complete penetration depth (distance is less than the penetration dept, which is 10 mm) or it might be observed at the maximum distance of penetration (i.e. 10 mm). The former situation is typically observed for a brittle gel and the latter for an elastic gel. The characteristic curve (penetration test) for a brittle gel and of an elastic gel are presented in Figure 1.

In the concentrate of the present invention, the firmness (expressed as maximum force in the penetration test) is preferably higher 15 g, more preferably higher than 20 g, even more preferably higher than 25 g, most preferably higher than 40 g. The firmness is preferably less than 1000 g, more preferably less than 700 g, even more preferably less than 400 g, most preferably less than 200 g.

Brittleness: Gels of the invention can be either more brittle or more elastic. Brittleness is defined, in the context of this invention, as the distance of penetration until the maximum force is achieved (in millimeters). It might be preferred that the gels have a certain brittleness so they are easier to spoon and easy to disperse in the application. In this case it might be preferred that the brittleness (expressed as the distance of penetration until the maximum force is achieved) is less than 8 mm, preferably more than 7 mm. In other cases it might be preferred that the gels are mostly elastic. In this case it might be preferred that the brittleness is more than 9 mm, preferably more than 9.5 mm.

Water

The food concentrate according to the invention comprises water. Water is preferably present in a total amount of from 35 to 90 wt%. More preferably water is present in an amount of from 40 to 85 wt%, more preferably of from 45 to 80 wt%, most preferably from 50 to 75wt%. Water is representing here the total water content of the food concentrate.

The water activity of the product is preferably of between 0.60 and 0.95, more preferably of between 0.65 and 0.90 even more preferably between 0.70 and 0.90, most preferably between 0.72 and 0.85.

In the present description the amounts of various ingredients have been described as based on the weight of the total water content in the food concentrate. Although not indicated everywhere in detail, these amounts should be calculated as (weight ingredient/(weight ingredient + weight total water content) ) *100 (in %).

Iota carrageenan

The food concentrate further comprises iota carrageenan. Carrageenans are high molecular weight polysaccharides derived from seaweed. As known in the art, iota carrageenan, more specifically, consists of $\beta(1{\rightarrow}4)$ D-galactose-4-sulphate and $\alpha(1 \rightarrow 3)$ 3,6-anhydro-D-galactose-2-sulphate. As conceivable for the skilled person, to provide the semi-solid gel texture of the concentrate according the present invention, the iota carrageenan is dissolved iota carrageenan, i.e. dissolved in the water of the food concentrate. When iota carrageenan is in the dissolved state, in the context of this invention it functions as a gelling agent. It forms a gel matrix and contributes in this way to the gel texture of the food concentrate. For example, the iota carrageenan is not in a precipitated state or otherwise in an inactive state. Iota-carrageenan showed a very different behaviour at the high salt conditions of the present invention compared to conventional low-salt conditions as normally observed in ready-to-eat compositions. For example, under low-salt conditions, iota-carrageenan has been described to depend on calcium ions to provide the gel formation. At the high salt levels of the present invention, calcium ions appeared not to be essential for gelation. For optimal gel strength, it might be preferred that the total amount of $Ca^{2+}$ and $Mg^{2+}$ ions taken together is lower than 3 wt%, preferably lower than 2.5 wt%, even more preferably lower than 2 wt%, even more preferably lower than 1%, most preferably lower than 0.5 wt%. It can be of between 0.01 and 2 wt%, preferably of between 0.02 and 1 wt%, more preferably of between 0.03 and 0.5 wt%, even more preferably of between 0.04 and 0.2 wt%, or even more preferably of between 0.04 and 0.1 wt%, based on the weight of the total water content of the food concentrate, and calculated as ((weight of $Ca^{2+}$ ions + weight of $Mg^{2+}$ ions) / (weight of $Ca^{2+}$ ions + weight of $Mg^{2+}$ ions + total weight of the water content in the food concentrate)) *100 (in %).

It is preferred that the iota-carrageenan is preferably present in an amount of from 0.2 wt% to 5 wt%, preferably of from 0.3 wt% to 3 wt%, more preferably of from 0.4 wt% to 2.5 wt%, most preferably of from 0.5 wt% to 2 wt%, based on the weight of the total water content of the food concentrate, and calculated as (weight of iota-carrageenan in the food concentrate / (weight of iota-carrageenan in the food concentrate + weight of total water content of the food concentrate))*100 (in %). It was observed that in the present invention a relatively low level of iota carrageenan, for example of from 0.5 wt% to 1.5 wt% based on the weight of the total water content of the food concentrate could provide a relatively strong gel, for example of from 40 to 300 g (firmness). A level of iota carrageenan of lower than 2 wt%, preferably of from 0.5 wt% to 1.5 wt%, based on the weight of the total water content of the food concentrate is therefore preferred.

For a salt content of higher than 20 wt% on total water content, the amount of iota-carrageenan is preferably of between 0.3 wt% and 3 wt%, more preferably of between 0.4 wt% and 2.5 wt% even more preferably between 0.5 wt% and 2 wt%, most preferably between 0.5 wt% and 1.5 wt% based on the weight of the total water content of the food concentrate.

For a salt content of higher than 10 wt% total water content, the amount of iota-carrageenan is preferably of between 0.2 wt% and 2.5 wt%, more preferably of between 0.3 wt% and 2 wt%, most preferably between 0.4 wt% and 1.2 wt%, based on the weight of the total water content of the food concentrate.

In the present invention, iota-carrageenan should be construed as iota-carrageenan polymer as such. It was observed, for example, that commercial iota-carrageenan is mixed with several chemical compounds, like other carrageenans or filler materials. When calculating the amounts mentioned above, only the iota-carrageenan polymer should be considered and not any impurities.

In addition to iota-carrageenan, the food concentrate might comprise additional texturing agents which contribute to the semi-solid gel texture. Texturing agents described in the art of high salt food concentrates are for example xanthan gum, galactomannans, or glucomannan. However, since an advantage of the present invention is that the concentration of additional texturing agents can be kept low, it might be preferred that additional texturing agents are present in minor amounts or more preferably, that at least 30 wt% of the total amount of texturing agent is iota-carrageenan, more preferably at least 50 wt%, even more preferably, at least 75 wt%, most preferably at least 90 wt%, based on the weight of the total amount of texturing polysaccharides, excluding starch.

The total amount of xanthan gum is preferably less than 0.6 wt%, preferably less than 0.4 wt%, more preferably less than 0.2 wt%, based on the weight of the total food concentrate. It can be preferred to be less than 0.1 wt%, even less than 0.05 wt%, based on the weight of the total food concentrate. The total amount of xanthan and galactomannan taken together is preferably less than 1 wt%, preferably less than 0.4 wt%, more preferably less than 0.2 wt%, based on the weight of the total food concentrate. The total amount amount of glucomannan is preferably less than 0.4 wt%, even more preferably less than 0.3 wt%, even more preferably less than 0.2 wt%, even more preferably less than 0.1 wt%, based on the weight of the total food concentrate.

Salt

The food concentrate according to the invention preferably comprises of from 10 wt% to 40 wt% of sodium salt (Na salt) and potassium salt (K salt) taken together, more preferably of from 12 wt% to 35 wt%, even more preferably of from 15 wt% to 32 wt%, even more preferably of from 20 wt% to 30 wt%, based on the weight of the total water content of the food concentrate. For unknown reasons, it was observed that the effects of the invention were most significant in high-salt concentrates, compared to low-salt compositions like for example ready-to-eat compositions. The amount of Na salt and K salt taken together is calculated as standard in the art, and is according to the following formula: ((weight of Na salt + weight of K salt) / (weight of Na salt + weight of K salt + weight of total water content)) *100 (in %). For example 5 g Na salt + K salt in 20 g total water content result in an amount of salt of 20 wt% based on the weight of the total water content. When preparing the food composition of the invention, these amounts of salts can be added during preparation.

According to the invention, the food concentrate comprises both $Na^+$ and $K^+$ cations. The combined presence of $Na^+$ and $K^+$ ions, at specific ratios, in the concentrate food compositions of the present invention surprising results in an unexpected effect. Counter intuitively, when both types of cations are present in the composition at high-salt levels, at specific ratios, the concentrate food concentrate shows a much firmer gel structure. This allows for the use of less gelling agent, while maintaining the firmness. The gel strength is much stronger compared to the situation when only $Na^+$ cations or $K^+$ cations is present at a similar total salt content based on the total water content. This is even the more surprising, since general knowledge suggests a reduction in gel strength at extreme salt levels (e.g. higher than 5 %wt based on the total water content), for both $Na^+$ and $K^+$ cations.

Without any further measures, iota-carrageenan gels solidify quickly at high levels of NaCl content. During production of food concentrates the liquid ingredient mixture may solidify almost instantly after leaving the filling nozzle and the risk for shearing of the gel during filling or for clogging in the machinery is serious. It was observed that the presence of both $Na^+$ and $K^+$ ions at specific ratios, resulted in an increased solidification time. This can overcome complications during production. Variation in the ratio $Na^+$ and $K^+$ ions allows the tailoring of the solidification time to the need of the production line. For example, the food concentrate should maintain sufficiently fluid during filling of the packaging, but solidify sufficiently fast, preferably without a cooling line, to prevent serious sedimentation of possible particulate material in the concentrate like vegetable pieces, or to prevent spoilage of the lid or seal with non-solidified gel material after closing of the packaging.

The ratio of $Na^+$ cations to the total amount of $Na^+$ cations and $K^+$ cations taken together, i.e. the ratio [$Na^+$cations/($Na^+$ cations + $K^+$ cations)], or for simplicity, ($Na^+$/($Na^+$+$K^+$))*100 (expressed in %) in the concentrate food composition according the invention is preferably of from 40% to 90%, more preferably from 45% to 88%, more preferably of from 50% to 86%, even more preferably from 55% to 84%, most preferably from 55% to 80%. These ratios resulted in most significant effects on gel formation and advantages indicated above.

The food composition preferably comprises Na salt. Most preferably, the Na salt comprises NaCl. NaCl is preferably present in an amount of from 4.5 wt% to 35 wt%, more preferably of from 6 wt% to 30 wt%, even more preferably of from 7 wt% to 28 wt%, most preferably of from 8 wt% to 26 wt%, based on/the total water content of the food concentrate.

The food composition comprises $Na^+$ cations. $Na^+$ cations are preferably present in an amount of from 1.8 wt% to 13 wt%, more preferably in an amount of from 2.4 wt% to 12 wt%, even more preferably in an amount of from 3 wt% to 11 wt%, most preferably from 4 wt% to 10 wt% based on the total water content of the food concentrate.

The food composition preferably comprises.K salt. Most preferably, the K salt comprises KCl. KCl is preferably present in an amount of from 1.5 to 20 wt%, more preferably of from 2 wt% to 18 wt%, even more preferably of from 3 wt% to 15 wt%, most preferably of from 4 wt% to 12 wt%, based on the weight of the total water content of the food concentrate.

The composition comprises $K^+$ cations. $K^+$ cations are preferably present in an amount of from 0.8 wt% to 11 wt%, most preferably from 1 wt% to 9.5 wt%, more preferably of from 1.5 wt% to 8 wt%, most preferably of from 2 wt% to 7 wt%, based on the weight of the total water content of the food concentrate.

Consequently, it is preferred that the food composition according to the invention has an amount of $Na^+$ cations and $K^+$ cations taken together of between 3 wt% and 25 wt%, preferably between 5 wt% and 20 wt%, most preferably between 8 wt% and 15 wt%, based on the total water content of the food concentrate, wherein the total amount of $Na^+$ cations and $K^+$ cations taken together is to be calculated as ((total weight of $Na^+$ cations + total weight of $K^+$ cations) / (total weight of $Na^+$ cations + total weight of $K^+$ cations + weight of total water content)) *100 (in %).

Other ingredients

Savoury taste enhancer

To contribute to the savoury character, the food concentrate of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% to15 wt%, based on the weight of the total food concentrate. An individual taste enhancer selected from the group mentioned above may be present in an amount of less than 30 wt%, more preferably of between 0.1 wt% and 30 wt%, preferably in an amount of from 1 wt% to 25 wt%, most preferably in an amount of from 5 wt% to 15 wt%, based on the weight of the total food concentrate.

Taste imparting components

In the concentrates according to the invention, it is preferred that taste-imparting components are present. They may comprise one or more of yeast extract; hydrolyzed proteins of vegetables-, soy-, fish-, or meat-origin; liquid or dissolvable extracts or concentrates selected from the group consisting of meat, fish, crustaceans, plant material (e.g. herbs, fruit, vegetable) and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise meat like beef, pork or chicken (and other fowl). Preferably the plant particles comprise particles selected from the group consisting of onion, garlic, leek, carrot, parsley, tomato and mixtures thereof. Preferably the total amount of taste-imparting components as set out above is from 1 wt% to 60 wt% (by weight on the total food concentrate). More preferred from 2 wt% to 50 wt%, even more preferably from 5 wt% to 40 wt% (by weight on the total food concentrate). Na salt and K salt are not categorised as taste imparting component but are indicated and described as separate ingredients in this description.

Preferably, the amount of particles, preferably particles selected from the group of particles of meat, particles of fish, particles of crustaceans, particles of plant (e.g. herbs, vegetable, fruit), particles of fungi (e.g. mushroom) and mixtures thereof is from 0.5 wt% to 60 wt%, more preferably from 1 wt% to 50 wt%, even more preferably from 2 wt% to 40 wt% (by weight on the total food concentrate). The amount of particles can be of from 0.5 wt% to 30 wt%, more preferably of from 1 to 20 wt%, even more preferably of from 2 to 10 wt% (weight based on the weight of the food concentrate). Weight of the particles is calculated as present in the food concentrate, which is normally the wet weight.

Fat

Fat may preferably be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 15 wt% of fat, preferably less than 10 wt% of fat. Fat may be present in an amount of from 0.5 to 15 wt% of fat, more preferably of from 1 to 10 wt% of fat, most preferably of from 3 to 10 wt% of fat, based on the weight of the food concentrate. The amount of fat in the food concentrate is preferably as low as possible, for optimal stability. It may be preferred that fat is absent.

Sugar

The food concentrate of the invention is a savoury food composition. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15 wt%, most preferably lower and 10 wt%. It can be more than 1 wt%, preferably more than 5 wt% based on the total weight of the concentrate. A suitable range could be of between 1 wt% and 20 wt%, preferably of from 3 wt% to 15 wt% based on the total weight of the concentrate. It may be preferred that the composition is free from sugar or free from any added sugar. Sugar polyols could also provide a sweet taste to the product resulting after dilution. The consumer may not appreciate the presence of these compounds. The concentration of sugar polyols, for example liquid sugar polyols, is preferably less than 1 wt%, more preferably less than 0.5 wt%, even more preferably less than 0.1 wt%, or less than 0.05 wt% based on the weight of the food concentrate. Most preferably the composition does not contain any added sugar polyol or added liquid sugar polyol.

The pH of the concentrate food composition (at room temperature, e.g. 20°C) of the invention is preferably higher than 3.5, preferably between 3.5 and 7, more preferably higher than 3.8, more preferably between 3.8 and 6, even more preferably higher than 4.0, even more preferably between 4.0 and 5.5. These levels provide optimal taste in the product resulting after dispersing in water or a dish.

The concentrate is diluted before consumption, to arrive at a ready-to-eat product. Dilution is preferably done in an aqueous solution or dish and occurs preferably relatively fast. Preferably, the food concentrate of the invention dissolves in water of 90°C - 100°C under gentle stirring within 3 minutes, preferably within 2 minutes. Preferably the concentrate of the invention results in a bouillon, a soup, a sauce, a gravy or a seasoned dish after dilution in an aqueous liquid, preferably in water, at a dilution ratio of between 5 and 50, preferably of between 10 and 30, based on the weight of the concentrate.

Packaging/size:

The food concentrate according to the invention is preferably packaged. It is preferably packaged in a tub, a jar or a sachet, wherein the packaging preferably comprises one food composition.
The weight of the food composition is preferably of between 10 grams and 5 kg, more preferably of between 10 grams and 2 kg, more preferably of between 10 grams and 500 grams, more preferably of between 15 grams and 300 grams. It may be preferred that the weight of the food concentrate is between 10 grams and 50 grams. This latter format is in particular useful for unit dosing for family portions. It may be preferred that the food composition has a weight of between 50 grams and 2 kg, preferably of between 50 grams and 1 kg. This packaging may be especially suitable for restaurant applications.

Preferably, the invention relates to a food concentrate in the form of a semi-solid gel, comprising:

- from 35 wt% to 90 wt% of water,
- from 10 wt% to 40 wt% of sodium salt comprising NaCl and potassium salt comprising KCl taken together, based on the weight of the total water content of the food concentrate, calculated as ((weight of sodium salt + weight of potassium salt) / (weight of sodium salt + weight of potassium salt + weight of total water content)) *100 (in %),
- from 0.2 wt% to 5 wt% of iota-carrageenan, wherein the iota-carrageenan is dissolved in the water,
- wherein the ratio of ($Na^+$ cations/ ($Na^+$ cations + $K^+$ cations))*100 (in %) is from 40 to 90 wt%.

Process

In a further aspect the invention relates to a process to provide a concentrate according to the invention. The process comprises the steps of:

a) Providing a mixture comprising water and iota-carrageenan,
b) Adding sodium salt and potassium salt,
c) Heating the mixture,
d) Transferring the mixture to a packaging,

e) Solidifying the mixture,

to result in a food concentrate in the form of a semi-solid gel.

In a first step a) a mixture is provided comprising water and iota-carrageenan. The ingredients are mixed as known in the art.

Step b) comprises adding Na salt and K salt to the mixture. The salts can be added before, during or after the heating step c). Preferably, the salts are added before heating step c), for example preferably during or after step a), most preferably during step a). Na salt and K salt are preferably added in a total amount of from 10 wt% to 40 wt%, more preferably in a total amount of from 12 wt% to 35 wt%, even more preferably in an amount of from 15 wt% to 32 wt%, even more preferably in an amount of from 20 wt% to 30 wt%, based on the total water content of the resulting food concentrate.

The Na salt preferably comprises NaCl. The K salt preferably comprises KCl. Na salt, preferably NaCl, is preferably added in an amount of from 4.5 wt% to 35 wt%, more preferably of from 6 wt% to 30 wt%, even more preferably of from 7 wt% to 28 wt%, most preferably of from 8 wt% to 26 wt%, based on the weight of the total water content of the resulting food concentrate.

The composition will comprise $Na^+$ cations. $Na^+$ cations, preferably in the form of NaCl, are preferably added in an amount of from 1.8 wt% to 13 wt%, more preferably in an amount of from 2.4 wt% to 12 wt%, even more preferably in an amount of from 3 wt% to 11 wt%, most preferably from 4 wt% to 10% based on the weight of the total water content of the resulting food concentrate.

K salt, preferably KCl, is preferably added in an amount of from 1.5 to 20 wt%, more preferably of from 2 to 18 wt%, even more preferably of from 3 to 15 wt%, most preferably of from 4 to 12 wt%, based on the weight of total water content of the resulting food concentrate.

The composition will comprise $K^+$ cations. $K^+$ cations, preferably added in the form of KCl, are preferably added in an amount of from 0.8 wt% to 11 wt%, more preferably in an amount of from 1 wt% to 9.5 wt%, even more preferably in an amount of from 1.5 wt% to 8 wt%, most preferably from 2 wt% to 7 wt% based on the weight of the total water content of the resulting concentrate.

Preferably, Na salt and K salt are added in amounts to obtain a weight ratio of $(Na^+/(Na^++K^+))*100$ (in %) of from 40 to 90%, more preferably from 45 to 88%, even more preferably from 50 to 86%, even more preferably of from 55 to 85%, most preferably of from 55 to 80%, in the final resulting food concentrate. This ratio is calculated, for example as following:

| e.g. in 75 g of water | | Ratio: $(Na^+/(Na^++K^+))*100$ (in %) |
|---|---|---|
| NaCl (g) =20 | $Na^+$ cations=7.9 (g) | |
| KCl (g) =5 | $K^+$ cations =2.6(g) | 75% |
| | $Na^+$ cations +$K^+$ cations =10.5(g) | |

Step c) comprises heating of the mixture, preferably resulting from step a) or b). Heating is carried out e.g. to result in a solution. By heating the iota carrageenan becomes optimally activated as a gelling agent. Heating is preferably carried out up to a temperature of the mixture of between 70°C and 99°C, preferably of between 80°C and 95°C.

Addition of other ingredients

The process may further comprise the step of adding taste imparting components and/or savoury taste enhancer. This step may comprise adding vegetable pieces, fruit pieces, herb pieces, meat pieces, fungi pieces and mixtures thereof. Taste imparting components, savoury taste enhancers and fat can be added in the amounts as described above under "other ingredients". For example, the taste imparting components may be added in an amount of from 1 to 60 wt%, based on the weight of the total resulting food composition. The savoury taste enhancer may be added in an amount of from 0.1 to 30 wt%, based on the weight of the total resulting food composition.
Fat may be added in an amount of below 15 wt%, more preferably below 10 wt%, based on the weight of the resulting concentrate food composition.
The step of addition of taste imparting components and/or savoury taste enhancer can be carried out during or after step a), and preferably before solidification step e). Preferably, this step is carried out before or during step c).

The mixture normally comprising water, iota-carrageenan, Na salt, K salt and preferably taste imparting ingredients and/or savoury taste enhancer is transferred to a packaging in step d). Step d) is preferably carried out after step c). This packaging is preferably a tub, a jar, a sachet, a stick-pack, more preferably a tub.

In step e), the mixture is solidified. Solidification preferably comprises gelling of the mixture. Solidification preferably comprises allowing to solidify, for example by allowing the mixture to cool down. Solidification preferably comprises cooling, preferably up to a temperature of the mixture of between 0°C and 60°C, preferably of between 5°C and 55°C, most preferably of between 10°C and 40°C. The solidification step is preferably carried out during or after the packaging step d). Solidification preferably takes place in the packaging, i.e. preferably after step d). When the solidification is carried out before the packaging step d), solidification can be carried out in a mould. By the present invention, the time required for solidification of the gel could be significantly increased in a tailored manner.

It was found that the solidification properties of the food concentrates of the present invention allowed for filling said liquid ingredient mixture for the gelled concentrates with ease into their packaging after the cooling process has started, without disturbing the final gel-texture of the product.

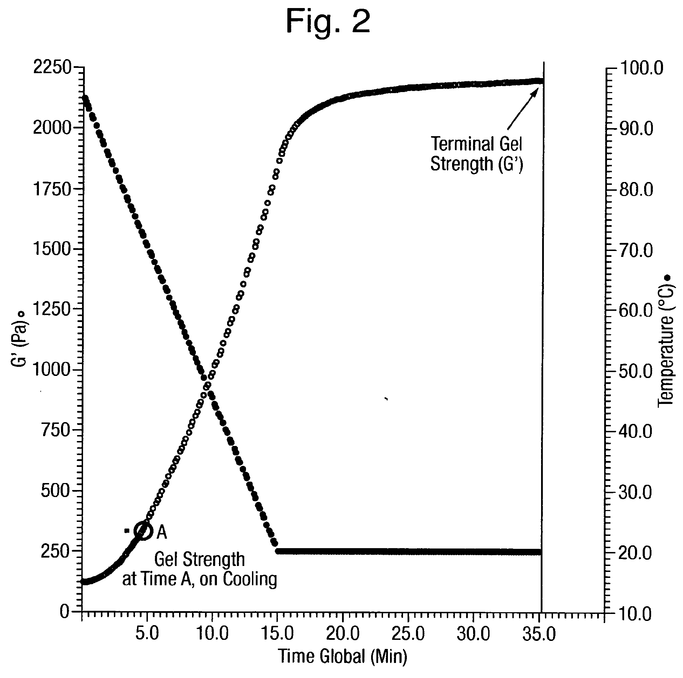

The difference in solidification time between 2 gels can be analysed by quantifying the relative amount of solidification that is reached over time. This can be done, for example, by measuring the relative amount of solidification (level of solidification compared to the level of solidification observed in the final semi-solid gel) at a specific time point during the solidification process, for example after some minutes. For the purpose of this invention differences in the solidification behaviour of gelled food concentrates are quantified by measuring the change in elastic modulus G' during cooling of the liquid ingredient mixture for the gel at a fixed cooling rate and during subsequent solidification of the gel over time as described above (Detailed description of the invention, protocol for measuring elastic and viscous modulus). For comparison, a "residual gel strength" is defined as the ratio of the elastic modulus measured at a pre-defined time after the cooling phase has started (in Figure 2, time at "A") to the elastic modulus measured when the semi-solid gel texture has formed, the "terminal gel strength". A typical time-G'-temperature graph is indicated in Figure 2. The elastic modulus G' is plotted against the time (in min) and against the temperature (°C).The calculation of the "residual gel strength", as described in this invention, can therefore be expressed as:

$$\text{Residual gel strength:} \quad \frac{\text{Gel strength at time A, on cooling}}{\text{"Terminal gel strength"}} \times 100 \text{ (in \%)}$$

The residual gel strength at a chosen time during solidification is a measure for the solidification time. A lower value for the residual gel strength corresponds to a longer solidification time, as obtained by the present invention.

For example, in Figure 2, the residual gel strength is calculated as:

- " Terminal gel strength" : 2200 Pa (after 20 min plateau is achieved i.e. change in G' is < 3% within 1 min)
- Gel strength at time " A" (5 min, temperature 70 °C): 385 Pa

  ○ *Residual gel strength = 17.5%*

Preferably, the invention relates to a process to provide a food concentrate according to the invention, the process comprising the steps of:

a) Providing a mixture comprising water and iota-carrageenan,
b) Adding sodium salt and potassium salt during step a),
c) Heating the mixture resulting from step a) or b),
d) Transferring the mixture to a packaging, after step c),
e) Solidifying the mixture, after step d),

to result in a food concentrate in the form of a semi-solid gel.

The invention further relates to a product obtainable by, preferably obtained by a process according to the invention.

Use

In a further aspect, the present invention relates to the use of the food concentrate according to the invention for preparing a bouillon, a soup, a sauce, a gravy or a seasoned dish. The use according to the present invention preferably comprises diluting the food concentrate according to the invention, at least part of it, in an aqueous liquid, or mixing it into a dish. The aqueous liquid is preferably water, but can be a sauce, a soup, etc. The dish can be a vegetable dish, meat, fowl, fish etc. The temperature of the aqueous solution or dish is preferably of between 60°C and 100°C, more preferably of between 70°C and 95°C. The food composition according to the invention preferably disperses relatively fast in hot water (e.g. 95°C). It may be preferred that 25 gram disperses in 500 ml of hot water (preferably of 95°C) within 5 minutes, preferably within 3 minutes, more preferably within 2 minutes. Dispersing is normally carried out under gentle stirring.

Advantages

Conventionally, iota carrageenan gels with a high NaCl level show solidification quickly after reducing the temperature below the (high) activation temperature of around 95°C. As a result, a narrow time frame was available to bring the liquid ingredient mixture for the gel in the packaging, including the risk of cluttering in the machinery. By the present invention it becomes possible to provide a much wider time frame to fill the packaging, reducing the need for heating and related energy costs. The combination of sodium and potassium in a high salt iota-carrageenan gel surprisingly resulted in significantly higher gel strength, allowing the use of less iota-carageenan. Further, it even became possible now to use iota-carrageenan as the only gelling agent. It was further observed that after cooling down of the product resulting from diluting the food concentrate, for example a bouillon, hardly any undesired increase in viscosity occurred.

The invention is now exemplified by the following, non-limiting examples:

**Example 1:** Iota carrageenan gels with different

```
[Na⁺/(Na⁺+K⁺)]*100]  (in %) - Effect on Firmness, dispersion and
gelation ("processability" )
```

Preparation method:

- All ingredients were added (water, iota carrageenan powder, salts) to the water while stirring well by using a Thermomix, at a speed 5)
- The mixture was heated to 95 °C and kept at this temperature for at least 5 min.
- The hot mixture was filled into containers,
- The filled containers were allowed to cool down at room temperature to solidify.

Firmness, G' and residual gel strength after 7 minutes of cooling at 5°C per minute were analysed according to the protocols as indicated in the description to analyse the relative solidification rate. For analyzing the residual gel strength a temperature ramp was used with a rate of 5°C/min.

Results:

|  | A (Control) | B | C | D |
|---|---|---|---|---|
| Water | 75.6% | 75.6% | 75.6% | 75.6% |
| Iota carrageenan powder (Sigma Aldrich-C1138) | 1.5% | 1.5% | 1.5% | 1.5% |
| NaCl | 22.9% | 20.2% | 19.3% | 18.3% |
| KCl | 0.0% | 2.7% | 3.6% | 4.6% |
|  | 100% | 100% | 100% | 100% |
| [Na⁺/ (Na⁺+K⁺) ] *100 | 100% | 85% | 80% | 75% |
| Firmness (in g) | 28.9 | 592.1 | 675.7 | 241.0 |
| G' (in Pa) | 137 | 5473 | 11277 | 10171 |

(continued)

| | A (Control) | B | C | D |
|---|---|---|---|---|
| Residual gel strength (in %) after 7 min. cooling at 5°C per min (T~60°C) | 67% | 13% | 22% | 20% |

- No gel was formed in the presence of 100% KCl, based on the total amount of Na and K salt together (negative control, not shown in the table).
- Gels with KCl in combination with NaCl, at the indicated ratios, were easier to process, i.e. easier to fill into containers (packaging) as an increased solidification time was obtained (shown by the low residual gel strength values).
- Much stronger gels were obtained when KCl was used in combination with NaCl, at the indicated ratios (as was observed in both increased firmness and G')
- Similar dispersion times were observed for all samples, despite the increase in firmness.

**Example 2:** Savoury food concentrates - 14.4% salt on water content

Preparation method:

• All ingredients were added (water, iota carrageenan powder, salts) to the water while stirring well (using a Thermomix at a speed 5)
• The mixture was heated to 95°C and kept at this temperature for at least 5 min
• Savoury Mix was added while still at 95°C and kept at this temperature for at least 3 min while stirring
• The hot mixture was filled into containers
• The filled containers were allowed to cool down at room temperature to solidify
• Firmness and residual gel strength after 7 minutes of cooling at 5°C per minute were analysed according to the protocols as indicated in the description.

| | A | B | C |
|---|---|---|---|
| iota-carrageenan powder (Viscarin SD 389, FMC Biopolymer) | 1.1% | 1.1% | 1.1% |
| Water | 73.9% | 73.9% | 73.9% |
| Savoury Mix* | 16.7% | 16.7% | 16.7% |
| NaCl | 6.2% | 5.5% | 4.2% |
| KCl | 2.1% | 2.8% | 4.1% |
| Total | 100% | 100% | 100% |
| * Sugar, Meat powder, Yeast extract, caramel coloring, flavor, white, pepper, parsley. Contains 7.61% $Na^+$ and 3.15% $K^+$. These values were taken into account for the calculation of the ion ratios (below) | | | |

| | | | |
|---|---|---|---|
| $[Na^+ / (Na^+ + K^+)]$ *100 | 70% | 64% | 52% |
| Firmness (in g) | 59 | 87 | 245 |
| Residual gel strength (in %) after 7 min. cooling at 5°C per min (T~60°C) | 12% | 18% | 4% |

• Gels could be obtained that were stronger when potassium salt was used in combination with sodium salt at specified ratios in increasing amounts.
• The gels showed a similar dispersion time, indicating that the dispersion times were not affected by increasing the gel strengths.
• Gels with KCl in combination with NaCl, at the ratios of the invention, were easier to process, i.e. easier to fill into containers (packaging) as an increased solidification time was obtained, as reflected by their respective decrease in residual gel strengths after 7 minutes.

**Example 3:** Savoury food concentrates - Effect on Firmness, dispersion and gelation ("processability")

Preparation method:

• All ingredients were added (water, iota carrageenan powder, savoury mix, salts) to the water while stirring well (using a Thermomix, at a speed 5)
• The mixture was heated to 95°C and kept at this temperature for at least 5 min
• The hot mixture was filled into containers
• The filled containers were allowed to cool down at room temperature to solidify
• Firmness was analysed according to the protocol indicated in the description.

Total salt in the aqueous phase was 17.5% (NaCl + KCl)

| | Control | 3A | 3B |
|---|---|---|---|
| iota- carrageenan powder (Viscarin SD 389) | 1.5% | 1.5% | 1.5% |
| Water | 73.6% | 73.6% | 73.6% |
| Savoury Mix* | 12.4% | 12.3% | 12.4% |
| NaCl | 12.5% | 11.1% | 10.0% |
| KCl | 0.0% | 1.5% | 2.5% |
| | 100.0% | 100.0% | 100.0% |
| * Sugar, Meat powder, Yeast extract, caramel coloring, flavor, white, pepper, parsley. Contains 7.61% $Na^+$ and 3.15% $K^+$. These values were taking into account on the calculation of the ratios (below) | | | |
| [$Na^+$/ ($Na^+$+$K^+$) ] *100 | 94% | 82% | 74% |
| Firmness (g) | 11 | 75 | 240 |

• Gels were stronger when potassium salt was used in combination with sodium salt at specified ratios, as shown by increased Firmness.
• The dispersion time of the gels was similar to that of the control sample, indicating that the dispersion time was not affected even though the gels were stronger
• Gels with KCl in combination with NaCl, at the ratios of the invention, were easier to process, i.e. easier to fill into containers (packaging).

**Example 4 :** Savoury food concentrates - Effect on Firmness and dispersion. Total salt in the 20.7% (NaCl + KCl), based on the water content.

Preparation was as in example 3. Firmness was analysed according to the protocols as indicated in the description.

| | Control | Ex 4 |
|---|---|---|
| iota- carrageenan powder (Viscarin SD 389) | 1.5% | 1.5% |
| Water | 71.0% | 71.0% |
| Savoury Mix* | 12.0% | 12.0% |
| NaCl | 15.5% | 13.7% |
| KCl | 0.0% | 1.8% |
| | 100.0% | 100.0% |
| * Sugar, Meat powder, Yeast extract, caramel coloring, flavor, white, pepper, parsley. Contains 7.61% Na+ and 3.15% K+. These values were taking into account on the calculation of the ratios (below) | | |
| [$Na^+$/ ($Na^+$+$K^+$) ] *100 | 95% | 83% |

(continued)

|  | Control | Ex 4 |
|---|---|---|
| Firmness (g) | 20 | 140 |

- A firmer gel was obtained when potassium salt was used in combination with sodium salt at specified ratios.
- A similar dispersion time was observed for both samples, indicating that the dispersion time was not affected even though the gel was stronger

**Example 5:** Iota-carrageenan gel

```
Total salt in the aqueous phase 22.2% (NaCl + KCl) - Effect on

Firmness
```

A semi-solid gel was prepared as described in Example 3. Firmness was analysed according to the protocol as indicated in the description.

|  | Control | Ex 5 |
|---|---|---|
| iota- carrageenan powder (Viscarin SD 389) | 1.4% | 1.4% |
| Water | 69.8% | 69.8% |
| Savoury Mix* | 11.8% | 11.8% |
| NaCl | 17.0% | 15.0% |
| KCl | 0.0% | 2.0% |
|  | 100.0% | 100.0% |
| * Sugar, Meat powder, Yeast extract, caramel coloring, flavor, white, pepper, parsley. Contains 7.61% Na+ and 3.15% K+. These values were taking into account on the calculation of the ratios (below) | | |
| [Na$^+$/ (Na$^+$+K$^+$) ] *100 | 95% | 83% |
| Firmness (in g) | 33 | 434 |

- A firmer gel was obtained when potassium salt was used in combination with sodium salt at specified ratios of the invention.

**Example 6:**

Comparison: Na-salt only vs. Na-salt + K-salt at different concentrations of iota carrageenan

Preparation:

- iota carrageenan was dispersed in cold water at speed 3 in a Thermomix apparatus for 8 min
- The salt or salt mixture was added to the mixture and mixed in at speed 3-4 for 8 min in the Thermomix apparatus
- The temperature of the Thermomix was set to 90°C, and mixing was continued for 25 min at speed 3-4
- The gel mixture was transferred into containers. The containers were sealed and stored at room temperature.
- Firmness and residual gel strength after 7 minutes of cooling at 5°C per minute were analysed according to the protocols as indicated in the description. For analyzing the residual gel strength a temperature ramp was used with a rate of 5°C/min.

| | 6A (comp. ex) | 6B |
|---|---|---|
| $[Na^+/ (Na^++K^+)]$ *100 | 100% | 75% |
| Iota carrageenan powder (Grindsted Carrageenan CX 302, Danisco) | 1.2% | 1.2% |
| Water | 76.0% | 76.0% |
| NaCl | 22.8% | 18.2% |
| KCl | 0.0% | 4.6% |
| | 100% | 100% |
| Firmness (g) | 15±2 (weak, not self-sustaining) | 186±2 (firm, self-sustaining) |
| Residual gel strength (in %) after 7 min. cooling at 5°C per min (T~60°C) | 81% | 25% |

| | 6C (comp. ex) | 6D |
|---|---|---|
| $[Na^+/ (Na^++K^+)]$ *100 | 100% | 75% |
| Iota carrageenan powder (Grindsted Carrageenan CX 302, Danisco) | 1.0% | 1.0% |
| Water | 76.2% | 76.2% |
| NaCl | 22.8% | 18.2% |
| KCl | 0.0% | 4.6% |
| | 100% | 100% |
| Firmness (g) | 12±1 (not self-sustaining) | 151±9 (self-sustaining) |
| Residual gel strength (in %) after 7 min. cooling at 5°C per min (T~60°C) | 75% | 29% |

| | 6E (comp. ex) | 6F |
|---|---|---|
| $[Na^+/ (Na^++K^+)]$ *100 | 100% | 75% |
| Iota carrageenan powder (Grindsted Carrageenan CX 302, Danisco) | 0.8% | 0.8% |
| Water | 76.4% | 76.4% |
| NaCl | 22.8% | 18.2% |
| KCl | 0.0% | 4.6% |
| | 100% | 100% |
| Firmness (g) | 11±2 (not self-sustaining) | 134±4 (self-sustaining) |
| Residual gel strength (in %) after 7 min. cooling at 5°C per min (T~60°C) | 73% | 31% |

| | 6G (comp. ex) | 6H |
|---|---|---|
| $[Na^+/ (Na^++K^+)]$ *100 | 100% | 75% |

(continued)

|  | 6G (comp. ex) | 6H |
|---|---|---|
| Iota carrageenan powder (Grindsted Carrageenan CX 302, Danisco) | **0.5%** | **0.5%** |
| Water | 76.7% | 76.7% |
| NaCl | 22.8% | 18.2% |
| KCl | 0.0% | 4.6% |
|  | 100% | 100% |
| Firmness (g) | 8±2 (not self-sustaining) | 103±16 (self-sustaining ) |
| Residual gel strength (in %) after 7 min. cooling at 5°C per min (T~60°C) | 70% | 29% |

• By using a mixture of potassium salt and sodium salt in a specific ratio a semi-solid gel texture could be obtained, whereas this was not possible when using sodium salt alone at these levels of iota-carrageenan.

• For a concentration of iota-carrageenan powder of from 0.5 to 1.2% (wt% based on total weight of the product), the use of a combination of Na-salt with K-salt ( [$Na^+$/ ($Na^+$+$K^+$) ] *100=75%) resulted in a texture of the product that was at least 12x firmer compared to products using only Na-salt.

• A gel could be prepared with a very low level of iota carrageenan powder (0.5%) and a combination of sodium salt and potassium salt ([$Na^+$/($Na^+$+$K^+$)]*100=75%), which still showed an acceptable firmness (103 g). (Example 6H).

• More than doubling of the amount of iota-carrageenan powder could not compensate for the use of potassium salt and sodium salt together. The gel strength was still at least 6 times higher in Example 6H compared to that comparative Example 6A.

## Claims

1. Food concentrate in the form of a semi-solid gel comprising

   • Water
   • From 10 wt% to 40 wt% of sodium salt and potassium salt taken together, based on the weight of the total water content of the food concentrate, calculated as ((weight of sodium salt + weight of potassium salt) / (weight of sodium salt + weight of potassium salt + weight of total water content))*100 (in %).
   • iota-carrageenan, wherein the iota-carrageenan is dissolved in the water,

   wherein the ratio of ($Na^+$ cations/($Na^+$ cations + $K^+$ cations)) *100 (in %) is from 40 to 90 wt%.

2. Food concentrate according to claim 1, wherein the ratio of ($Na^+$ cations/ ($Na^+$ cations + $K^+$ cations) ) *100 (in %) is from 45 to 88 wt%.

3. Food concentrate according to claim 1 or 2 wherein the total amount of $Na^+$ cations and $K^+$ cations taken together is of between 3 wt% and 25 wt% based on the weight of the total water content, wherein the total amount of $Na^+$ cations and $K^+$ cations taken together is to be calculated as ((total weight of $Na^+$ cations + total weight of $K^+$ cations) / (total weight of $Na^+$ cations + total weight of $K^+$ cations + weight of total water content)) *100 (in %).

4. Food concentrate according to any one of the preceding claims, wherein $K^+$ ions are present in an amount of from 0.8 wt% to 11 wt%, based on the weight of the total water content of the food concentrate, calculated as (total weight of $K^+$ ions / (total weight of $K^+$ ions + weight of total water content)) *100 (in %).

5. Food concentrate according to any one of the preceding claims, wherein the potassium salt comprises KCl in an amount of from 1.5 wt% to 20 wt% based on the weight of the total water content of the food concentrate, calculated as (total weight of KCl / (total weight of KCl + weight of total water content)) *100 (in %).

6. Food concentrate according to any one of the preceding claims, wherein the sodium salt comprises NaCl in an amount of from 4.5 wt% to 35 wt% based on the weight of the total water content of the food concentrate, calculated as (total weight of NaCl / (total weight of NaCl + weight of total water content)) *100 (in %).

7. Food concentrate according to any one of the preceding claims, wherein the iota-carrageenan is present in an amount of from 0.2 wt% to 5 wt%, based on the weight of the total water content of the food concentrate, calculated as (weight of iota-carrageenan / (weight of iota-carrageenan + weight of total water content)) *100 (in %).

8. Food concentrate according to any one of the preceding claims, wherein the total amount of $Ca^{2+}$ and $Mg^{2+}$ ions taken together is lower than 3 wt%, based on the weight of the total water content of the food concentrate, and calculated as ((weight $Ca^{2+}$ ions + weight $Mg^{2+}$ ions) / (weight $Ca^{2+}$ ions + weight $Mg^{2+}$ ions + total weight of the water content)) *100 (in %).

9. Food concentrate according to any one of the preceding claims, wherein the food concentrate further comprises taste imparting components selected from the group consisting of:

   • yeast extract;
   • hydrolyzed proteins of vegetables-, soy-, fish-, or meat-origin;
   • liquid or dissolvable extracts or concentrates selected from the group consisting of meat, fish, crustaceans, plant material and mixtures thereof;
   • particles of meat;
   • particles of fish;
   • particles of crustaceans;
   • particles of plant;
   • particles of fungi;
   • flavours and
   • mixtures thereof.

10. Food concentrate according to any one of the preceding claims, wherein the food concentrate further comprises a savoury taste enhancer selected from the group consisting of monosodium glutamate (MSG), 5'-ribonucleotides, organic acid and mixtures thereof.

11. Food concentrate according to any one of the preceding claims, wherein the food concentrate has a firmness of higher than 15 g.

12. Food concentrate according to any one of the preceding claims, wherein the food concentrate is a concentrate for preparing a bouillon, a soup, a sauce, a gravy or is a concentrate seasoning.

13. Process to provide a food concentrate according to any one of the preceding claims, the process comprising the steps of:

   a) Providing a mixture comprising water and iota-carrageenan,
   b) Adding sodium salt and potassium salt
   c) Heating the mixture,
   d) Transferring the mixture to a packaging,
   e) Solidifying the mixture,

   to result in a food concentrate in the form of a gel.

14. Process according to claim 13, wherein the step of heating the mixture resulting from step a) or b) comprises heating said mixture up to a temperature of between 70°C and 99°C, preferably of between 80°C and 95°C.

15. Use of the food concentrate according to any one of claims 1 to 12 for preparing a bouillon, a soup, a sauce, a gravy or a seasoned dish.

**Patentansprüche**

1. Lebensmittelkonzentrat in Form eines halbfesten Gels, umfassend

   • Wasser
   • von 10 Gew.-% bis 40 Gew.-% Natriumsalz und Kaliumsalz zusammengenommen, bezogen auf das Gewicht des gesamten Wassergehalts des Lebensmittelkonzentrats, berechnet als ((Gewicht von Natriumsalz + Gewicht von Kaliumsalz) / (Gewicht von Natriumsalz + Gewicht von Kaliumsalz + Gewicht des gesamten Wassergehalts))*100 (in %).
   • Jota-Carrageen, wobei das Jota-Carrageen in Wasser aufgelöst ist,

   wobei das Verhältnis von ($Na^+$-Kationen/($Na^+$-Kationen + $K^+$-Kationen))*100 (in %) 40 bis 90 Gew.-% beträgt.

2. Lebensmittelkonzentrat gemäß Anspruch 1, wobei das Verhältnis von ($Na^+$-Kationen/($Na^+$-Kationen + $K^+$-Kationen))*100 (in %) 45 bis 88 Gew.-% beträgt.

3. Lebensmittelkonzentrat gemäß Anspruch 1 oder 2, wobei die Gesamtmenge von $Na^+$-Kationen und $K^+$-Kationen zusammengenommen zwischen 3 Gew.-% und 25 Gew.-%, bezogen auf das Gewicht des gesamten Wassergehalts, beträgt, wobei die Gesamtmenge von $Na^+$-Kationen und $K^+$-Kationen zusammengenommen berechnet wird als (Gesamtgewicht von $Na^+$-Kationen + Gesamtgewicht von $K^+$-Kationen) / (Gesamtgewicht von $Na^+$-Kationen + Gesamtgewicht von $K^+$-Kationen + Gewicht des gesamten Wassergehalts))*100 (in %).

4. Lebensmittelkonzentrat gemäß jedem der vorangehenden Ansprüche, wobei $K^+$-Ionen in einer Menge von 0,8 Gew.-% bis 11 Gew.-%, bezogen auf das Gewicht des gesamten Wassergehalts des Lebensmittelkonzentrats, vorliegen, berechnet als (Gesamtgewicht von $K^+$-Ionen / (Gesamtgewicht von $K^+$-Ionen + Gewicht des gesamten Wassergehalts))*100 (in %).

5. Lebensmittelkonzentrat gemäß jedem der vorangehenden Ansprüche, wobei das Kaliumsalz KCl in einer Menge von 1,5 Gew.-% bis 20 Gew.-%, bezogen auf das Gewicht des gesamten Wassergehalts des Lebensmittelkonzentrats, umfasst, berechnet als (Gesamtgewicht von KCl / (Gesamtgewicht von KCl + Gewicht des gesamten Wassergehalts))*100 (in %).

6. Lebensmittelkonzentrat gemäß jedem der vorstehenden Ansprüche, wobei das Natriumsalz NaCl in einer Menge von 4,5 Gew.-% bis 35 Gew.-%, bezogen auf das Gewicht des gesamten Wassergehalts des Lebensmittelkonzentrat, umfasst, berechnet als (Gesamtgewicht von NaCl / (Gesamtgewicht von NaCl + Gewicht des gesamten Wassergehalts))*100 (in %).

7. Lebensmittelkonzentrat gemäß jedem der vorstehenden Ansprüche, wobei das Jota-Carrageen in einer Menge von 0,2 Gew.-% bis 5 Gew.-%, bezogen auf das Gewicht des gesamten Wassergehalts im Lebensmittelkonzentrat, vorliegt, berechnet als (Gewicht von Jota-Carrageen / (Gewicht von Jota-Carrageen + Gewicht des gesamten Wassergehalts))*100 (in %).

8. Lebensmittelkonzentrat gemäß jedem der vorstehenden Ansprüche, wobei die Gesamtmenge an $Ca^{2+}$- und $Mg^{2+}$-Ionen zusammengenommen geringer als 3 Gew.-%, bezogen auf das Gewicht des gesamten Wassergehalts des Lebensmittelkonzentrats, ist und berechnet ist als ((Gewicht $Ca^{2+}$-Ionen + Gewicht $Mg^{2+}$-Ionen) / (Gewicht $Ca^{2+}$-Ionen + Gewicht $Mg^{2+}$-Ionen + Gesamtgewicht des Wassergehalts))*100 (in %).

9. Lebensmittelkonzentrat gemäß jedem der vorstehenden Ansprüche, wobei das Lebensmittelkonzentrat weiterhin geschmacksverleihende Bestandteile, ausgewählt aus der Gruppe, bestehend aus:

   • Hefeextrakt;
   • hydrolysierte Proteine aus Gemüse-, Soja-, Fisch- oder Fleischherkunft;
   • flüssige oder auflösbare Extrakten oder Konzentrate, ausgewählt aus der Gruppe bestehend aus Fleisch, Fisch, Krustentieren, Pflanzenmaterial und Mischungen davon;
   • Teilchen von Fleisch;
   • Teilchen von Fisch;
   • Teilchen von Krustentieren;
   • Teilchen von Pflanzen;

• Teilchen von Pilzen;
• Geschmacksstoffen und
• Mischungen davon

umfasst.

10. Lebensmittelkonzentrat gemäß jedem der vorstehenden Ansprüche, wobei das Lebensmittelkonzentrat weiterhin Geschmacksverstärker, ausgewählt aus der Gruppe bestehend aus Mononatriumglutamat (MSG), 5'-Ribonucleotiden, organischen Säuren und Mischungen davon umfasst.

11. Lebensmittelkonzentrat gemäß jedem der vorstehenden Ansprüche, wobei das Lebensmittelkonzentrat eine Festigkeit von mehr als 15 g aufweist.

12. Lebensmittelkonzentrat gemäß jedem der vorstehenden Ansprüche, wobei das Lebensmittelkonzentrat ein Konzentrat zur Herstellung einer Bouillon, einer Suppe, einer Soße, einer Bratensoße ist oder ein Würzkonzentrat ist.

13. Verfahren zur Herstellung eines Lebensmittelkonzentrats gemäß jedem der vorstehenden Ansprüche, das die Schritte:

   a) Vorlegen einer Mischung, umfassend Wasser und Jota-Carrageen,
   b) Zugabe von Natriumsalz und Kaliumsalz,
   c) Erhitzen der Mischung,
   d) Überführen der Mischung in eine Verpackung,
   e) Verfestigung der Mischung, umfasst,

   um ein Lebensmittelkonzentrat in Form eines Gels zu bilden.

14. Verfahren gemäß Anspruch 13, wobei der Schritt des Erhitzens der aus den Schritten a) oder b) erhältlichen Mischung ein Erhitzen der Mischung bis auf eine Temperatur von zwischen 70°C und 99°C, vorzugsweise zwischen 80°C und 95°C umfasst.

15. Verwendung des Lebensmittelkonzentrats gemäß jedem der Ansprüche 1 bis 12 zur Herstellung einer Bouillon, einer Suppe, einer Soße, einer Bratensoße oder eines gewürzten Gerichts.

## Revendications

1. Concentré alimentaire dans la forme d'un gel semi-solide comprenant

   • de l'eau
   • de 10 % en masse à 40 % en masse de sel de sodium et de sel de potassium pris ensemble, rapportés à la masse du contenu total d'eau du concentré alimentaire, calculé comme ((masse de sel de sodium + masse de sel de potassium)/(masse de sel de sodium + masse de sel de potassium + masse du contenu total d'eau)) * 100 (en %).
   • du carraghénane-iota, dans lequel le carraghénane-iota est dissous dans l'eau,

   dans lequel le rapport de (cations $Na^+$/(cations $Na^+$ + cations $K^+$)) * 100 (en %) est de 40 à 90 % en masse.

2. Concentré alimentaire selon la revendication 1, dans lequel le rapport de (cations $Na^+$/(cations $Na^+$ + cations $K^+$)) * 100 (en %) est de 45 à 88 % en masse.

3. Concentré alimentaire selon la revendication 1 ou 2, dans lequel la quantité totale de cations $Na^+$ et de cations $K^+$ pris ensemble est comprise entre 3 % en masse et 25 % en masse rapporté à la masse du contenu total d'eau, dans lequel la quantité totale de cations $Na^+$ et de cations $K^+$ pris ensemble doit être calculée comme ((masse totale de cations $Na^+$ + masse totale de cations $K^+$)/(masse totale de cations $Na^+$ + masse totale de cations $K^+$ + masse du contenu total d'eau)) * 100 (en %).

4. Concentré alimentaire selon l'une quelconque des revendications précédentes, dans lequel les ions $K^+$ sont présents

19

dans une quantité de 0,8 % en masse à 11 % en masse, rapporté à la masse du contenu total d'eau du concentré alimentaire, calculé comme (masse totale d'ions $K^+$/(masse totale d'ions $K^+$ + masse du contenu total d'eau)) * 100 (en %).

5. Concentré alimentaire selon l'une quelconque des revendications précédentes, dans lequel le sel de potassium comprend KCl dans une quantité de 1,5 % en masse à 20 % en masse rapporté à la masse du contenu total d'eau du concentré alimentaire, calculé comme (masse totale de KCl/(masse totale de KCl + masse du contenu total d'eau)) * 100 (en %).

6. Concentré alimentaire selon l'une quelconque des revendications précédentes, dans lequel le sel de sodium comprend NaCl dans une quantité de 4,5 % en masse à 35 % en masse rapporté à la masse du contenu total d'eau du concentré alimentaire, calculé comme (masse totale de NaCl/(masse totale de NaCl + masse du contenu total d'eau)) * 100 (en %).

7. Concentré alimentaire selon l'une quelconque des revendications précédentes, dans lequel le carraghénane-iota est présent dans une quantité de 0,2 % en masse à 5 % en masse, rapporté à la masse du contenu total d'eau du concentré alimentaire, calculé comme (masse de carraghénane-iota/(masse de carraghénane-iota + masse du contenu total d'eau)) * 100 (en %).

8. Concentré alimentaire selon l'une quelconque des revendications précédentes, dans lequel la quantité totale d'ions $Ca^{2+}$ et $Mg^{2+}$ pris ensemble est inférieure à 3 % en masse, rapporté à la masse du contenu total d'eau du concentré alimentaire, et calculé comme ((masse d'ions $Ca^{2+}$ + masse d'ions $Mg^{2+}$)/(masse d'ions $Ca^{2+}$ + masse d'ions $Mg^{2+}$ + masse totale du contenu d'eau)) * 100 (en %).

9. Concentré alimentaire selon l'une quelconque des revendications précédentes, dans lequel le concentré alimentaire comprend de plus des constituants communicant du goût choisis dans le groupe constitué par :

- un extrait de levure ;
- des protéines hydrolysées provenant de légumes, de soja, de poisson ou de viande ;
- des extraits ou des concentrés liquides ou dissolvables choisis dans le groupe constitué de viande, de poisson, de crustacés, de matière de plante et de mélanges de ceux-ci ;
- des particules de viande ;
- des particules de poisson ;
- des particules de crustacés ;
- des particules de plante ;
- des particules de champignon ;
- des arômes et
- des mélanges de ceux-ci.

10. Concentré alimentaire selon l'une quelconque des revendications précédentes, dans lequel le concentré alimentaire comprend de plus un exhausteur de goût savoureux choisi dans le groupe constitué de glutamate de monosodium (MSG), de 5'-ribonucléotides, d'acide organique et de mélanges de ceux-ci.

11. Concentré alimentaire selon l'une quelconque des revendications précédentes, dans lequel le concentré alimentaire présente une fermeté supérieure à 15 g.

12. Concentré alimentaire selon l'une quelconque des revendications précédentes, dans lequel le concentré alimentaire est un concentré pour préparer un bouillon, une soupe, une sauce, un jus ou est un assaisonnement de concentré.

13. Procédé de fourniture d'un concentré alimentaire selon l'une quelconque des revendications précédentes, le procédé comprenant les étapes consistant :

a) à fournir un mélange comprenant de l'eau et du carraghénane-iota,
b) à ajouter un sel de sodium et un sel de potassium
c) à chauffer le mélange,
d) à transférer le mélange dans un emballage,
e) à solidifier le mélange,

pour résulter en un concentré alimentaire dans la forme d'un gel.

14. Procédé selon la revendication 13, dans lequel l'étape de chauffage du mélange résultant de l'étape a) ou b) comprend le chauffage dudit mélange jusqu'à une température comprise entre 70 °C et 99 °C, de préférence entre 80 °C et 95 °C.

15. Utilisation du concentré alimentaire selon l'une quelconque des revendications 1 à 12 pour la préparation d'un bouillon, d'une soupe, d'une sauce, d'un jus ou d'un plat assaisonné.

# Fig. 1

Force (g)

Brittle Gel:
Firmness = Maximum Force
<< Maximum Penetration
Depth

Elastic Gel:
Firmness = Maximum Force
= or ~ Maximum
Penetration Depth

5 mm

10 mm
= Maximum
Penetration Depth

Distance (mm)

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012062919 A